# EUROPÄISCHE PATENTSCHRIFT

(11) **EP 4 564 052 B1**
(45) Veröffentlichungstag und Bekanntmachung des Hinweises auf die Patenterteilung: **08.07.2026**
(21) Anmeldenummer: 24214675.1
(22) Anmeldetag: 22.11.2024
(51) Int. Cl.: G01S 7/481, G01S 7/497, G01S 17/42, G01S 17/931

(54) **OPTISCH TASTENDER SENSOR**
OPTICALLY PROBING SENSOR
PALPEUR OPTIQUE

(30) Priorität: 01.12.2023 DE 102023133650
(43) Veröffentlichungstag der Anmeldung: 04.06.2025
(73) Patentinhaber: SICK AG, 79183 Waldkirch (DE)
(72) Erfinder: STEIN, Patrick, 79189 Bad Krozingen (DE); HAMMES, Markus, 79117 Freiburg (DE)
(74) Vertreter: Manitz Finsterwald Patent- und Rechtsanwaltspartnerschaft mbB

(56) Entgegenhaltungen:
- DE-A1- 102020 202 800
- US-A1- 2019 235 052
- US-A1- 2020 292 679

## Beschreibung

Die Erfindung betrifft einen optisch tastenden Sensor mit einer Sendeeinheit zum Emittieren eines optischen Sendesignals in einen vorbestimmten Abtastbereich, mit einer Empfangseinheit, die einen reflektierten oder remittierten Teil des Sendesignals erfasst und ein entsprechendes Empfangssignal ausgibt, und mit einer Auswertungseinheit, die in der Lage ist, ein oder mehrere Objekte im Abtastbereich des Sensors anhand des Empfangssignals zu detektieren.

Solche optisch tastenden Sensoren können an Maschinen oder an fahrerlosen Transportsystemen wie z.B. autonom fahrenden Kraftfahrzeugen verwendet werden, um sicherheitsrelevante Objekte oder Personen in der Umgebung der Maschine oder des Transportsystems zu erkennen, beispielsweise mögliche Kollisionsobjekte des autonom fahrenden Kraftfahrzeugs. Steuerparameter der Maschine oder des Transportsystems, wie beispielsweise dessen Geschwindigkeit, können entsprechend angepasst werden, wenn der optisch tastende Sensor solche sicherheitsrelevanten Objekte oder Personen in der Umgebung der Maschine oder des Transportsystems erkennt.

Im Gegensatz zu einer Verwendung im Innenraum, d.h. in geschlossenen Räumen, sind solche Maschinen oder fahrerlose Transportsysteme im Außenraum Wettereinflüssen ausgesetzt, die zwangsläufig vorhanden sind, nicht kontrollierbar sind und für den produktiven Ablauf in einem Logistik- oder Produktionsumfeld der Maschine oder des Transportsystems sehr relevant sind.

Für einen effizienten produktiven Betrieb der Maschine oder des Transportsystems kann es entscheidend sein, Störungen durch widrige Wetterbedingungen, wie beispielsweise Nebel, Regen oder Schnee, oder aufgrund von Rauch, Staub oder Fremdkörpern im Sichtbereich bzw. Abtastbereich des Sensors zu erkennen und die Steuerungsparameter der Maschine oder des Fahrzeugs situationsbedingt anzupassen.

Solche äußeren Einflüsse können die Funktionsweise von optisch tastenden Sensoren, beispielsweise Lidar-Sensoren, bezüglich verschiedener Aspekte einschränken. Aufgrund der Absorption eines Sendesignals des Sensors, beispielsweise durch Tröpfchen von Nebel oder Wasserdampf oder durch Partikel, kann die Reichweite des Sendesignals verkürzt werden. Ferner können aufgrund solcher Störeinflüsse Detektionsverluste bei Empfangssignalen auftreten, welche durch diejenigen Sendesignale erzeugt werden, die an Objekten reflektiert oder remittiert werden, beispielsweise an sicherheitsrelevanten Personen oder Kollisionsobjekten. Außerdem kann beispielsweise der Nebel direkt anstelle von Objekten detektiert werden, die dann sozusagen im Nebel verborgen sind, so dass der optisch tastende Sensor eine verringerte Verfügbarkeit aufweist. Zusätzlich kann Nebel oder Wasserdampf an einer Frontscheibe eines optisch tastenden Sensors kondensieren und dadurch die Intensität der Sende- und Empfangssignale verringern.

Bei einer gewissen Dichte verursacht Nebel darüber hinaus möglicherweise kein geeignetes Lichtecho bzw. Empfangssignal für den optisch tastenden Sensor, so dass der Nebel mittels des Sensors nicht direkt erkannt werden kann. In dieser Situation kann der Nebel die Sende- und Empfangssignale des optisch tastenden Sensors dennoch derart abschwächen, dass eine Detektion eines sicherheitsrelevanten Objekts nicht mehr erfolgen kann, während gleichzeitig kein Nachweis des Nebels erfolgt, welcher beispielsweise zu einer Verringerung der Geschwindigkeit eines Transportsystems führen sollte. Dies wird auch als "gefahrbringender Ausfall" bezeichnet. Der optisch tastende Sensor sollte jedoch in der Lage sein, auch in Situationen bzw. bei Umgebungsbedingungen, die zu einem solchen gefahrbringenden Ausfall führen, eine geeignete Maßnahme zur Vermeidung der möglichen Gefahr einleiten zu können.

Aus der US 2019/0235052 A1 ist ein optisch tastender Sensor mit den Merkmalen gemäß dem Oberbergriff des Anspruchs 1 bekannt.

Die US 2020/0292679 A1 beschreibt ein Lidarsystem, bei dem Hindernisse bzw. Fremdkörper an einem Schutzfenster des Lidarsystems nachgewiesen werden, wobei eine Mustererkennung für die Fremdkörper am Schutzfenster durchgeführt wird.

In der DE 10 2020 202 800 A1 ist ebenfalls ein Lidarsystem beschrieben, bei dem eine Varianz von Abständen von Oberflächen bezogen auf das Lidarsystem betrachtet wird, um Störeinflüsse wie etwa Nebel nachzuweisen.

Eine Aufgabe der Erfindung besteht folglich darin, einen optisch tastenden Sensor zu schaffen, der in der Lage ist, Störeinflüsse bei der Detektion von Objekten, die beispielsweise durch widrige Wetterbedingungen, insbesondere Nebel, oder andere widrige Umgebungsbedingungen hervorgerufen werden, auf zuverlässige Weise zu erkennen. Solche anderen widrigen Umgebungsbedingungen beziehen sich beispielsweise auf Wasserdampf, Rauch oder Fremdkörper, die in den Sichtbereich des Sensors gelangen.

Diese Aufgabe wird durch einen optisch tastenden Sensor mit den Merkmalen des Anspruchs 1 gelöst. Vorteilhafte Weiterbildungen der Erfindung sind in den Unteransprüchen, der Beschreibung und den Zeichnungen angegeben.

Der optisch tastende Sensor umfasst eine Sendeeinheit, eine Empfangseinheit und eine Auswertungseinheit. Die Sendeeinheit ist zum Emittieren eines optisch tastenden Sendesignals in einen vorbestimmten Abtastbereich des Sensors vorgesehen. Die Empfangseinheit ist ausgebildet, einen reflektierten oder remittierten Teil des Sendesignals zu erfassen und ein entsprechendes Empfangssignal auszugeben. Ferner ist die Auswertungseinheit ausgebildet, zumindest ein Objekt in dem Abtastbereich des Sensors anhand des Empfangssignals zu detektieren.

Der Abtastbereich umfasst erfindungsgemäß einen Teilbereich, der sich durch mindestens eine Charakteristik bezüglich des Sendesignals, des Empfangssignals und/oder der Auswertung des Empfangssignals von dem restlichen Abtastbereich unterscheidet. Die Auswertungseinheit ist ausgebildet, Störeinflüsse, welche die Detektion des Objekts behindern, anhand eines Anteils des Empfangssignals nachzuweisen, der dem Teilbereich zugeordnet ist.

Die Störeinflüsse, welche gegebenenfalls die Detektion des Objekts behindern, können beispielsweise Wettereinflüsse oder Umgebungsbedingungen sein, welche das Vorhandensein beispielsweise von Tröpfchen oder Partikeln in dem Abtastbereich des Sensors bewirken, z.B. in der Form von Nebel, Wasserdampf, Staub oder Rauch. Solche Tröpfchen oder Partikel können Licht im Abtastbereich absorbieren oder streuen und dadurch das Sendesignal und das Empfangssignal abschwächen.

Der Nachweis der Störeinflüsse erfolgt somit durch eine Sonderbehandlung des Teilbereichs innerhalb des vorbestimmten Abtastbereichs des Sensors, bei welcher sich bezüglich mindestens einer Eigenschaft oder Charakteristik von dem übrigen Abtastbereich des Sensors unterscheidet. Diese Eigenschaft oder Charakteristik betrifft das Sendesignal, das Empfangssignal und/oder die Auswertung des Empfangssignals aus dem Teilbereich, das/die sich von den Signalen bzw. der Auswertung für den restlichen Abtastbereich unterscheidet/unterscheiden. Solche unterscheidenden Charakteristiken des Teilbereichs bezüglich des restlichen Abtastbereichs können zum Beispiel folgendermaßen implementiert werden: Die Sendeeinheit kann beispielsweise in den Teilbereich eine höhere Lichtintensität emittieren als in den restlichen Abtastbereich. Alternativ oder zusätzlich kann die Empfangseinheit bezüglich des Teilbereichs eine erhöhte Empfindlichkeit aufweisen, beispielsweise mittels separater Empfangs- bzw. Detektionselemente für den Teilbereich. Ferner kann die Auswertungseinheit das Empfangssignal, das aus dem Teilbereich stammt, auf andere Weise auswerten als das Empfangssignal aus dem restlichen Abtastbereich, wenn die Auswertungseinheit über eine geeignete Information verfügt, wann der Sensor den Teilbereich abtastet.

Ferner kann Information an die Auswertungseinheit übertragen werden, die beinhaltet, wann die Sendeeinheit den zum Nachweis der Störeinflüsse vorgesehenen Teilbereich innerhalb des Abtastbereichs überdeckt bzw. überstreicht und das optische Sendesignal somit nahezu ausschließlich in den Teilbereich emittiert wird. Dadurch kann es für die Auswertungseinheit möglich sein, eine separate Auswertung für den Nachweis der Störeinflüsse anhand des Teilbereichs durchzuführen, ohne dass sich das Sendesignal und/oder das Empfangssignal für den Teilbereich von den entsprechenden Sende- und Empfangssignalen für den restlichen Abtastbereich unterscheiden. Der Teilbereich kann ferner auch als Nebelerkennungsbereich bezeichnet werden, wenn Nebel als hauptsächlicher Störeinfluss nachgewiesen werden soll.

Aufgrund der separaten Detektion der Störeinflüsse in dem Teilbereich des Abtastbereichs können beispielsweise Nebel, Schnee und ähnliche widrige Wetterbedingungen auf zuverlässige Weise nachgewiesen bzw. erkannt werden. Die Auswertungseinheit kann dann, wenn Störeinflüsse nachgewiesen werden, ein entsprechendes Signal beispielsweise in der Form eines entsprechenden Bits ausgeben, das dann von weiteren Vorrichtungen verwendet wird, die mit dem optisch tastenden Sensor in Verbindung stehen.

Der optisch tastende Sensor kann beispielsweise an einem Transportsystem, insbesondere an einem autonomen fahrenden Kraftfahrzeug, oder an einer Maschine installiert sein, die für den Außenbereich vorgesehen und damit Wettereinflüssen ausgesetzt sind. Alternativ kann ein erfindungsgemäßer optisch tastender Sensor auch im Innenraum zum Einsatz kommen, um beispielsweise bei einem chemischen Produktionsprozess erkennen zu können, wann eine Störung beispielsweise durch austretenden Rauch oder Dampf auftritt, der die Detektionsfähigkeit des Sensors bezüglich zu erkennender Objekte einschränkt.

Aufgrund des separaten Nachweises der Störeinflüsse innerhalb des Teilbereichs des Abtastbereichs können Detektionsverluste aufgrund von speziellen Umgebungsbedingungen vermieden werden, da der zuverlässigere Nachweis der Störeinflüsse eine Änderung der Parameter für die Sendeeinheit und/oder die Empfangseinheit auslösen kann, so dass deren Konfiguration beispielsweise an Nebel- bzw. Wetterbedingungen angepasst werden kann. Dadurch wird die Verfügbarkeit des optisch tastenden Sensors verbessert bzw. auf solche Situationen erweitert, in denen bisher keine oder eine unzuverlässige Detektion von Störeinflüssen erfolgte, die möglicherweise mit Detektionsverlusten verbunden war.

Wenn der optisch tastende Sensor an einem Transportsystem oder einer Maschine installiert ist, kann der vorbestimmte Abtastbereich einem Schutzfeld für das Fahrzeug bzw. die Maschine zugeordnet sein. Wenn beispielsweise starker Nebel nachgewiesen wird, kann der Betrieb des Fahrzeugs bzw. der Maschine in einen Schutzmodus mit robusterem bzw. verkleinertem Schutzfeld, beispielsweise aufgrund einer verringerten Geschwindigkeit des Transportsystems, umgeschaltet werden. Während bei bekannten Maschinen bzw. Transportsystemen häufig eine Abschaltung bei dem Nachweis von starkem Nebel vorgesehen ist, können das Fahrzeug und die Maschine mit dem erfindungsgemäßen optisch tastenden Sensor weiterhin im Schutzmodus, beispielsweise mit verringerter Geschwindigkeit, betrieben werden, ohne dass eine vollständige Abschaltung erforderlich ist.

Dadurch kann die Produktivität des Transportsystems bzw. der Maschine erhöht werden.

Da der Teilbereich innerhalb des Abtastbereichs beispielsweise nur einen kleinen Raumwinkelbereich umfasst, erfordert der Nachweis der Störeinflüsse innerhalb des Abtastbereichs keine Einschränkung für den gesamten Raumwinkelbereich, über den sich der vorbestimmte Abtastbereich des Sensors erstreckt. Mit anderen Worten wird der eigentliche Verwendungszweck des optisch tastenden Sensors, d.h. die Detektion eines oder mehrerer Objekte innerhalb des Abtastbereichs des Sensors, nicht durch den separaten Nachweis der Störeinflüsse eingeschränkt.

Aufgrund des separaten Nachweises der Störeinflüsse kann ferner ein vergrößertes Schutzfeld, das dem vorbestimmten Abtastbereich des Sensors zugeordnet ist, verwendet werden, da im Gegensatz zu bekannten Sensoren bestenfalls eine geringe Energiemenge beispielsweise für den Nachweis von Nebel bzw. den Betrieb bei Nebel zurückgehalten zu werden braucht. Darüber hinaus ist der Nachweis der Störeinflüsse durch die Auswertungseinheit mit einem geringen Rechenaufwand verbunden.

Gemäß einer Ausführungsform kann das Sendesignal zu aufeinanderfolgenden Zeitpunkten jeweils eine vorbestimmte geometrische Form innerhalb des Abtastbereichs abdecken, und diese geometrische Form kann den Teilbereich zum Nachweis der Störeinflüsse zu mindestens einem vorbestimmten Zeitpunkt abdecken. Der optisch tastende Sensor kann beispielsweise zum Abtasten bzw. Überwachen eines bestimmten Raumbereichs vor dem Sensor vorgesehen sein, d.h. als 3D-Scanner verwendet werden. Die Abtastung des Raumbereichs kann in einzelnen Ebenen bzw. Scanlagen erfolgen, die zeitlich nacheinander oder zeitlich parallel (falls für jede Lage ein separater Sender und Empfänger verwendet wird) abgetastet werden. Alternativ zu einzelnen Ebenen können auch andersartige Raumelemente zur Abtastung des Raumbereichs bzw. Abtastbereichs vorgesehen sein, beispielsweise einzelne Raumwinkel bzw. Pixel, Zylinderflächen, konische verlaufende Flächen, oder Lissajous-Figuren, die somit die vorbestimmte geometrische Form zum Abtasten bzw. Überstreichen des vorbestimmten Abtastbereichs bilden.

Der Teilbereich innerhalb des vorbestimmten Abtastbereichs, der für den Nachweis der Störeinflüsse vorgesehen ist, kann somit durch eine der vorstehend genannten geometrischen Formen beispielsweise zu einem oder zu mehreren vorbestimmten Zeitpunkten definiert sein. Da die jeweilige geometrische Form und der Zeitpunkt, zu dem diese den Teilbereich abdeckt bzw. sich innerhalb dessen befindet, vordefiniert und damit der Auswertungseinheit bekannt sein können, kann die Zuverlässigkeit und Robustheit des Nachweises der Störeinflüsse weiter verbessert werden.

Das Sendesignal überstreicht den Abtastbereich erfindungsgemäß in aufeinanderfolgenden Scanlagen. Der Teilbereich ist durch mindestens eine ausgewählte Scanlage gebildet. Der Sensor wird hierbei mit geringem Aufwand betrieben, da einzelne Scanlagen vorgegeben sind, von denen mindestens eine Scanlage als Teilbereich ausgewählt wird.

Die jeweilige Scanlage kann eben ausgebildet sein, indem beispielsweise das Sendesignal in der Form eines Licht- oder Laserstrahls zunächst in einer vorgegebenen Ebene als erste Scanlage abgelenkt wird und anschließend um eine kurze Distanz in einer Richtung senkrecht zu der Ebene der ersten Scanlage verschoben wird, um den Licht- oder Laserstrahl wiederum innerhalb einer weiteren Ebene als nächsten Scanlage abzulenken. Auf diese Weise kann der gesamte Abtastbereich sukzessive gescannt werden.

In der Praxis erfolgt eine solche Ablenkung des Licht- oder Laserstrahl jedoch oftmals nicht in einer idealen Ebene als Scanlage. Vielmehr sind die Flächen, in denen der Licht- oder Laserstrahl innerhalb einer Scanlage abgelenkt wird, zum Beispiel konisch ausgebildet. Bei dem Durchlaufen des Abtastbereichs kann die Krümmung solcher konisch geformten Scanlagen beispielsweise von einer ersten, obersten Scanlage bis zu einer mittleren Scanlage abnehmen, so dass diese mittlere Scanlage eben ausgebildet ist. Bei der weiteren Abtastung kann die Krümmung der jeweiligen Scanlage beispielsweise unterhalb der mittleren, ebenen Scanlage wiederum bis zur letzten bzw. untersten Scanlage zunehmen.

Um den Teilbereich festzulegen, können statt nur einer auch mehrere Scanlagen ausgewählt werden. In diesem Fall ist es möglich, den Nachweis der Störeinflüsse für die jeweilige Scanlage durchzuführen und die Ergebnisse eines solchen jeweiligen Nachweises der Störeinflüsse auf Konsistenz zu überprüfen. Dies kann zu einer erhöhten Sicherheit für den Nachweis der Störeinflüsse führen. Die mehreren Scanlagen, die den Teilbereich zum Nachweis der Störeinflüsse bilden, müssen dabei nicht notwendigerweise aneinander angrenzen bzw. benachbart angeordnet sein.

Bei einer alternativen Ausführungsform können die verschiedenen Scanlagen eines solchen optisch tastenden Sensors frei konfigurierbar sein. Für die jeweilige Scanlage kann in diesem Fall festgelegt werden, ob diese für den Nachweis der Störeinflüsse oder zur Erkennung von Konturen eines Objekts oder sogar für beides vorgesehen sein soll.

Bei einer weiteren Ausführungsform ist der Sensor an einer Sensorposition an einer Vorrichtung angebracht. Die mindestens eine ausgewählte Scanlage, die den Teilbereich bildet, kann bei dieser Ausführungsform oberhalb einer horizontalen Ebene angeordnet sein, welche die Sensorposition umfasst und welche parallel zu einer Bodenebene verläuft, auf der die Vorrichtung sich befindet. Die Vorrichtung kann wiederum ein Transportsystem, beispielsweise ein autonom fahrendes Kraftfahrzeug, oder eine Maschine sein, die für den Außenbereich vorgesehen sind. Da die ausgewählte Scanlage für den Nachweis der Störeinflüsse oberhalb der horizontalen Ebene verläuft, kann keine unerwünschte "Kollision" des Sendesignals mit dem Boden auftreten, die möglicherweise zu Störungen bei dem Nachweis der Störeinflüsse führen könnte. Durch die Auswahl der ebenen Scanlage oberhalb der horizontalen Ebene kann somit die Zuverlässigkeit bei dem Nachweis der Störeinflüsse verbessert werden.

Bei einer weiteren Ausführungsform kann dem Teilbereich ein separates Sendeelement oder mehrere separate Sendeelemente der Sendeeinheit zugeordnet sein.

Bei dem separaten Sendeelement kann es sich um einen separaten Laser oder eine separate Leuchtdiode (LED) der Sendeeinheit handeln, der bzw. die für den Teilbereich vorgesehen ist und ein separates Sendesignal in den Teilbereich emittiert. Der Teilbereich unterscheidet sich von dem übrigen Abtastbereich des Sensors bei dieser Ausführungsform somit dadurch, dass dem Teilbereich eine erhöhte

Lichtintensität zugeführt wird, um die Störeinflüsse in diesem nachweisen zu können.

Alternativ oder zusätzlich kann dem Teilbereich ein separates Empfangselement oder mehrere separate Empfangselemente der Empfangseinheit zugeordnet sein. Bei dem separaten Empfangselement kann es sich beispielsweise um eine separate Avalanche-Fotodiode (APD) handeln, insbesondere um eine Einzelphotonen-Avalanchediode (SPAD, von Single-Photon Avalanche Diode). Das separate Empfangselement kann ferner ein separates Empfangssignal für den Nachweis der Störeinflüsse an die Auswertungseinheit senden. Durch diese Trennung des Empfangssignals bezüglich des Nachweises der Störeinflüsse von den weiteren Empfangssignalen kann die Zuverlässigkeit bei dem Nachweis der Störeinflüsse weiter verbessert werden.

Das separate Empfangselement der Empfangseinheit, das dem Teilbereich zugeordnet ist, kann zum Beispiel auch eine größere Sensitivität aufweisen als die weiteren Empfangselemente der Empfangseinheit. Die größere Sensitivität kann beispielsweise dadurch erreicht werden, dass für das separate Empfangselement ein größerer Verstärkungsfaktor oder ein verringerter Schwellenwert als für die weiteren Empfangselemente der Empfangseinheit vorgesehen ist. Ferner kann wiederum eine erhöhte Intensität des von der Sendeeinheit emittierten Lichts für das separate Empfangselement zur Detektion der Störeinflüsse vorgesehen sein.

Bei einer weiteren Ausführungsform kann die Auswertungseinheit ausgebildet sein, das Empfangssignal, das dem Teilbereich zugeordnet ist, mittels spezieller Auswertungsschritte zu verarbeiten, die von den Auswertungsschritten verschieden sind, mit denen die Auswertungseinheit das Empfangssignal verarbeitet, das den weiteren Bereichen des Abtastbereichs außerhalb des Teilbereichs zugeordnet ist.

Dem Teilbereich kann somit durch die Auswertungseinheit eine eigene Auswertung zugeordnet werden, die zum Nachweis der Störeinflüsse vorgesehen ist, während die weiteren Bereiche des Abtastbereichs beispielsweise zur Erzeugung von 3D-Umgebungsdaten oder zur Detektion sicherheitsrelevanter Objekte vorgesehen sein können.

Der Nachweis von Nebel und anderen Störungen innerhalb eines Abtastbereichs anhand optischer Signale ist allgemein beispielsweise in der EP 3 435 117 A1 oder der EP 3 588 139 A1 beschrieben. Bevorzugt kann der Nachweis der Störeinflüsse wie beispielsweise der Nachweis von Nebel innerhalb des Teilbereichs anhand von Signaturen eines Schwingkreises erfolgen.

Die Auswertungseinheit kann ferner ausgebildet sein, ein zusätzliches Kontrollsignal zu empfangen und den Nachweis der Störeinflüsse anhand des Kontrollsignals zu überprüfen. Das Kontrollsignal kann beispielsweise von einem Feuchtigkeitssensor und/oder einem Taupunktsensor bereitgestellt werden. Ein Kontrollsignal solcher Sensoren kann zur Überprüfung des Nachweises beispielsweise von Nebel mittels des optisch tastenden Sensors verwendet werden, da Nebel erst bei einer bestimmten relativen Feuchtigkeit vorliegen kann, beispielsweise ab 95% relativer Feuchte. Durch diese zusätzliche Überprüfung mittels des Kontrollsignals kann ein fehlerhafter Nachweis von Störeinflüssen vermieden werden. Mit anderen Worten kann der Nachweis der Störeinflüsse mittels des optisch tastenden Sensors mittels des Kontrollsignals verifiziert werden, bevor die Auswertungseinheit ausgeben kann, dass Störeinflüsse in dem vorbestimmten Abtastbereich vorliegen.

Der optisch tastende Sensor kann zum Beispiel als Lidar-Sensor ausgebildet sein. Dabei kann es sich um ein 2D- oder ein 3D-Lidarsystem handeln. Wie vorstehend erläutert, können die Störeinflüsse beispielsweise Nebel umfassen.

Ferner betrifft die Erfindung die Verwendung eines Sensors mit den vorstehend beschriebenen Merkmalen zum Nachweis von Störeinflüssen, insbesondere von Nebel, in einem Abtastbereich des Sensors.

Wenn eine Vorrichtung, beispielsweise ein Transportsystem oder eine Maschine, mit dem vorstehend beschriebenen optisch tastenden Sensor versehen ist, können deren sicherheitsrelevante Parameter anhand des Nachweises von Störeinflüssen angepasst werden. Wenn Störeinflüsse in dem Abtastbereich des Sensors nachgewiesen werden, kann eine Konfiguration eines Schutzfeldes der Vorrichtung entsprechend angepasst werden, oder es kann die Geschwindigkeit im Falle eines Transportsystems wie etwa eines autonomen fahrenden Kraftfahrzeugs verringert werden.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: eine Darstellung eines Fahrzeugs mit einem erfindungsgemäßen optisch tastenden Sensor und
- Fig. 2: ein Blockdiagramm mit Elementen des Sensors von Fig.1 .

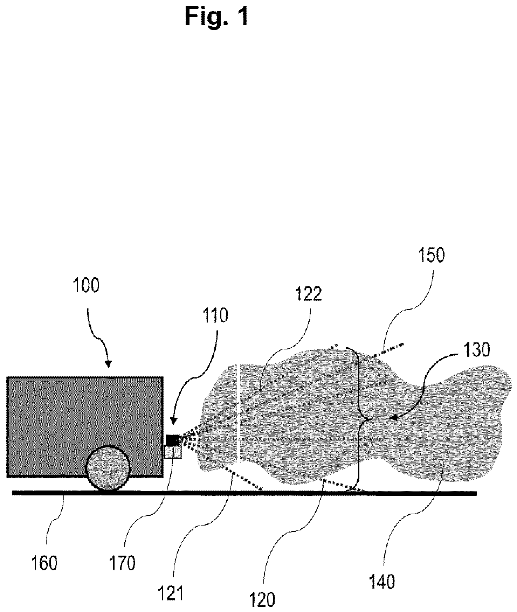

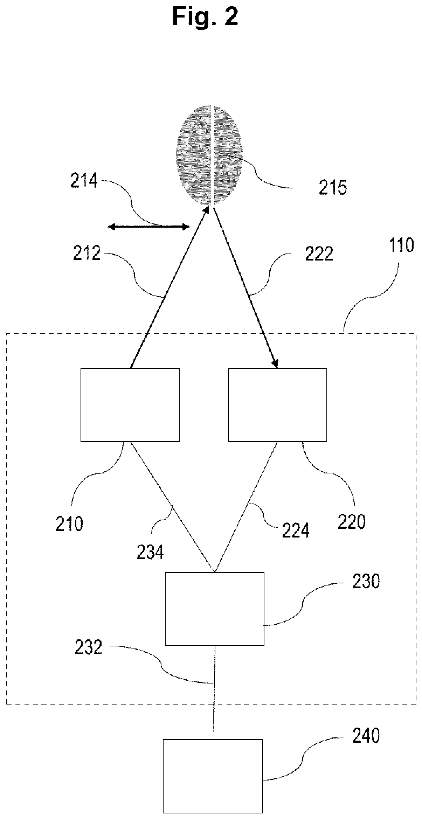

Fig. 1 zeigt schematisch eine Seitenansicht eines Fahrzeugs 100, an dem ein optisch tastender Sensor 110 angebracht ist. Der optisch tastende Sensor 110 ist hier als 3D-Lidarsystem ausgebildet. Der Sensor 110 umfasst eine Sendeeinheit 210 (vgl. Fig. 2), die ein optisches Sendesignal 212 in einen Außenbereich des Fahrzeugs 100 emittiert. Die Sendeeinheit 210 ist als Laserscanner ausgebildet, der den Außenbereich des Fahrzeugs 100 in einer Vielzahl von Scanlagen 120 (vgl. Fig. 1) abtastet.

**In** jeder Scanlage 120 tastet der Laserscanner bzw. die Sendeeinheit 210 eine bestimmte Fläche ab, die sich bezogen auf das Fahrzeug 100 in Querrichtung und in Fig. 1 senkrecht zur Zeichenebene erstreckt. Die Abtastung des Außenbereichs des Fahrzeugs 100 erfolgt zum Beispiel somit mittels des Sensors 110 aufeinanderfolgend in einer Vielzahl von Ebenen, die sich zwischen einer untersten Scanlage 121 und einer obersten Scanlage 122 erstrecken.

**In** der Praxis sind die Scanlagen 120 jedoch oftmals keine idealen Ebenen. Vielmehr sind die Flächen, in denen der Licht- oder Laserstrahl innerhalb einer Scanlage 120 abgelenkt wird, zumindest leicht konisch ausgebildet. Bei dem Durchlaufen des Abtastbereichs 130 nimmt die Krümmung solcher konisch geformten Scanlagen 120 von einer ersten, obersten Scanlage 122 bis zu einer mittleren Scanlage ab, so dass diese mittlere Scanlage nahezu eben ausgebildet ist. Bei der weiteren Abtastung nimmt die Krümmung der jeweiligen Scanlage 120 unterhalb der mittleren, ebenen Scanlage wieder bis zur letzten bzw. untersten Scanlage 121 zu.

Durch die endliche Reichweite des Sendesignals 212 und den Winkel, den das Sendesignal 212 innerhalb jeder Scanlage 120 in lateraler Richtung überstreicht, d.h. in der Querrichtung zu dem Fahrzeug 100, ist ein Abtastbereich 130 für den Sensor 110 definiert. Der Abtastbereich 130 ist in Fig. 1 durch eine Klammer zwischen der obersten Scanlage 122 und der untersten Scanlage 121 dargestellt. Der Abtastbereich 130 ist somit ein Volumen im Außenbereich des Fahrzeugs zwischen den äußersten Scanlagen 121, 122, das in Querrichtung durch den Winkel begrenzt ist, den das Sendesignal 122 in jeder Scanlage 120 überstreicht.

Der primäre Verwendungszweck des Sensors 110 besteht darin, innerhalb des Abtastbereichs 130 ein oder mehrere Objekte 215 (vgl. Fig. 2) nachzuweisen bzw. die Kontur eines jeweiligen Objekts 215 zu erkennen bzw. abzubilden. Das Abtasten der Kontur des Objekts 215 ist in Fig. 2 durch den Doppelpfeil 214 angedeutet, der sich bezogen auf den Sensor 110 in Querrichtung erstreckt.

Ein Teil des Sendesignals 212 wird an dem Objekt 215 reflektiert oder remittiert. Dieses reflektierte oder remittierte Licht 222 wird von einer Empfangseinheit 220 des Sensors 110 erfasst, so dass die Empfangseinheit 220 ein entsprechendes Empfangssignal 224 ausgibt und an eine Auswertungseinheit 230 des Sensors 110 überträgt. Anhand des Empfangssignals 224 ermittelt die Auswertungseinheit 230 die Kontur des Objekts 215. Mittels der Auswertungseinheit 230 kann der Sensor 110 somit das Vorhandensein eines Objekts 215 innerhalb des Abtastbereichs 130 nachweisen und dessen räumliche Form bzw. Kontur sozusagen aus der Sicht des optisch tastenden Sensors 110 ermitteln.

Die Informationen bezüglich des Vorhandenseins des Objekts 215 innerhalb des Abtastbereichs 130 und bezüglich dessen Kontur gibt die Auswertungseinheit 230 in der Form eines Ausgangssignals 232 des Sensors 110 an ein Steuermodul 240 des Fahrzeugs 100 außerhalb des Sensors 110 weiter. Das Steuermodul 240 kann das Ausgangssignal 232 des Sensors 110 verwenden, um beispielsweise sicherheitsrelevante Entscheidungen bei der Steuerung des Fahrzeugs 100 zu treffen, beispielsweise eine Verringerung von dessen Geschwindigkeit, um eine Kollision mit dem Objekt 215 zu vermeiden.

Wenn sich der Abtastbereich 130 des Sensors 110 im Außenbereich des Fahrzeugs 100 befindet, ist der Abtastbereich 130 Wetterbedingungen unterworfen. Bei einer Störung aufgrund widriger Wetterbedingungen wie beispielsweise Nebel 140, der in Fig. 1 angedeutet ist und den Abtastbereich 130 überlagert, kann die Funktionsweise des Sensors 110 eingeschränkt sein.

Zum einen weist das Sendesignal 212 bei Nebel eine verringerte Reichweite auf, da ein Teil des von der Sendeeinheit 210 emittierten Lichts von dem Nebel 140 absorbiert wird. Durch eine Kondensation von Nebel 140 an einer Frontscheibe (nicht gezeigt) des Sensors 110 kann die Reichweite des Sendesignals 212 darüber hinaus zusätzlich verringert sein. Durch den Nebel 140 können ferner möglicherweise Detektionsverluste bezogen auf sicherheitsrelevante Objekte 215 auftreten, d.h. Verluste, die das Licht 222 betreffen, das von dem Objekt 215 reflektiert oder remittiert wird, und die sich in dem Empfangssignal 224 widerspiegeln.

Im Extremfall kann der Sensor 110 den Nebel 140 anstelle des Objekts 215 detektieren, was zu einem Abstoppen des Fahrzeugs 100 aufgrund des Nebels 140 führen kann. Bei einer gewissen Dichte des Nebels 140 kann der Nebel 140 jedoch das Sendesignal 212 dämpfen, ohne dass dies mittels des Sensors 110 erkannt werden kann. In einem solchen Fall ist der Sensor 110 möglicherweise nicht mehr in der Lage, das Objekt 215 auf zuverlässige Weise innerhalb des Abtastbereichs 130 nachzuweisen.

Die vorstehend beschriebenen Schwierigkeiten können vermieden oder zumindest abgemildert werden, wenn Nebel oder andere widrige Wetterbedingungen im Außenbereich des Fahrzeugs 100 zuverlässig nachgewiesen werden können. Dann ist es möglich, für Betrieb des Sensors und/oder des Fahrzeugs 100 geeignete Maßnahmen zu ergreifen, die es gestatten, Objekte 215 im Außenbereich des Fahrzeugs 100 zu erfassen und das Fahrzeug 100 entsprechend zu steuern.

Der erfindungsgemäße Sensor 110 ist daher zusätzlich zur Nebelerkennung ausgestaltet. Zu diesem Zweck weist der Sensor 110 eine spezielle Scanlage 150 (vgl. Fig. 1) zum Nachweis von Nebel auf. Diese spezielle Scanlage oder Nebel-Scanlage 150 bildet einen Teilbereich innerhalb des Abtastbereichs 130, der sich durch mindestens eine Charakteristik bezüglich des Sendesignals 212, bezüglich des Empfangssignals 224 und/oder bezüglich der Auswertung des Empfangssignals 224 von den weiteren Scanlagen 120, d.h. von dem restlichen Abtastbereich 130, unterscheidet.

Die Nebel-Scanlage 150 ist ferner innerhalb des Abtastbereichs 130 derart angeordnet, dass sie eine Bodenfläche 160 nicht schneidet, auf der sich das Fahrzeug 100 befindet. Wenn der Sensor 110 an einer vorbestimmten Sensorposition 170 an dem Fahrzeug 100 installiert ist, beispielsweise an einer Stoßstange an der Vorderseite des Fahrzeugs 100, verläuft die Nebel-Scanlage 150 somit oberhalb einer horizontalen Ebene, welche die Sensorposition 170 umfasst und sich parallel zu der Bodenebene 160 erstreckt.

Die Nebel-Scanlage 150 unterscheidet sich gemäß der vorliegenden Ausführungsform von den weiteren Scanlagen 120 dadurch, dass für die Nebel-Scanlage ein separates Sendeelement, beispielsweise ein separater Laser oder eine separate Leuchtdiode (LED), innerhalb der Sendeeinheit 210 vorgesehen ist, deren Sendesignal 212 ausschließlich in der Nebel-Scanlage 150 verläuft. Alternativ oder zusätzlich weist die Empfangseinheit 220 ein separates Empfangselement für die Nebel-Scanlage 150 auf, beispielsweise eine separate APD (Avalanche-Photon Diode) oder eine separate SPAD (Single-Photon Avalanche Diode).

Durch das separate Sende- und/oder Empfangselement innerhalb der Sendeeinheit 210 und/oder der Empfangseinheit 220 ist die Auswertungseinheit 230 des Sensors 110 in der Lage, das Empfangssignal 224, das der Nebel-Scanlage 150 zugeordnet ist und aus deren Ebene bzw. Fläche stammt, von den Empfangssignalen 224 der übrigen Scanlagen 120 zu unterscheiden. Aufgrund eines Steuersignals 234, mit welchem die Abtastung des Abtastbereichs 130 durch des Sendesignals 212 gesteuert wird, verfügt die Auswertungseinheit 230 ferner über eine geeignete Information, wann das Sendesignal 212 die Nebel-Scanlage 150 abtastet. Bereits anhand dieser Information ist es möglich, dass die Auswertungseinheit 230 das Empfangssignal 224 der Nebel-Scanlage 150 geeignet zuordnet. Wenn die Empfangseinheit 220 ein separates Empfangselement für die Nebel-Scanlage 150 aufweist, kann dieses Empfangselement ferner eine größere Sensitivität als die weiteren Empfangselemente der Empfangseinheit 220 aufweisen. Beispielsweise kann das separate Empfangselement mit einem größeren Verstärkungsfaktor versehen sein als die weiteren Empfangselemente.

Da die Auswertungseinheit 230 das Empfangssignal 224 der Nebel-Scanlage 150 von den weiteren Empfangssignalen 224 der übrigen Scanlagen 120 unterscheiden kann, wie vorstehend erläutert ist, führt die Auswertungseinheit 230 spezielle Auswertungsschritte aus, die sich von den Auswertungsschritten unterscheiden, mit denen die Auswertungseinheit 230 die Kontur des Objekts 215 erkennt bzw. nachbildet. Anhand des Empfangssignals 224, das der Nebel-Scanlage 150 zugeordnet ist, führt die Auswertungseinheit 230 somit Auswertungsschritte aus, mit denen der Nebel 140 innerhalb des Abtastbereichs 130 nachgewiesen werden kann. Der Nachweis von Nebel erfolgt beispielsweise anhand von Schwingkreis-Signaturen. Spezielle Auswertungsschritte zur optischen Nebelerkennung sind beispielsweise in der EP 3 435 117 A1 und in der EP 3 588 139 A1 beschrieben.

Wenn die Auswertungseinheit 230 des Sensors 110 den Nebel 140 innerhalb des Abtastbereichs 130 nachweist, gibt die Auswertungseinheit 230 eine spezielle Information bzw. ein spezielles Signal innerhalb des Ausgangssignals 232 aus, das an das Steuermodul 240 übertragen wird. Beispielsweise setzt die Auswertungseinheit 230 innerhalb des Ausgangssignals 232 ein entsprechendes Bit für den Nachweis des Nebels 140.

Das Steuermodul 240 verwendet anschließend die in dem Ausgangssignal re 232 enthaltene Information bezüglich des Vorhandenseins von Nebel 140 innerhalb des Abtastbereichs 130, um geeignete Steuermaßnahmen zu ergreifen. Beispielsweise kann die Geschwindigkeit des Fahrzeugs 100 verringert werden, und/oder es können die Abmessungen eines Schutzfeldes verkleinert werden, das für den Nachweis von Objekten 215 im Außenbereich des Fahrzeugs 100 in Betracht gezogen wird. Beispiele für eine Konfiguration eines solchen Schutzfeldes für das Fahrzeug 100 sind in der EP 3 287 809 A1 beschrieben.

Der Nebel 140 ist lediglich ein Beispiel für mögliche Störeinflüsse auf den Abtastbereich 130, die das Sendesignal 212 und/oder das Empfangssignal 224 aufgrund der Absorption oder Streuung von Licht abschwächen können.

### Bezugszeichenliste

- 100: Fahrzeug
- 110: optisch tastender Sensor
- 120: Scanlage
- 121: unterste Scanlage
- 122: oberste Scanlage
- 130: Abtastbereich
- 140: Störeinflüsse, Nebel
- 150: Teilbereich des Abtastbereichs, Nebel-Scanlage
- 160: Bodenebene
- 170: Sensorposition
- 210: Sendeeinheit
- 212: Sendesignal
- 214: Abtastung innerhalb einer Scanlage
- 215: Objekt
- 220: Empfangseinheit
- 222: am Objekt reflektiertes oder remittiertes Licht
- 224: Empfangssignal
- 230: Auswertungseinheit
- 232: Ausgangssignal
- 234: Steuersignal
- 240: Steuermodul des Fahrzeugs

## Patentansprüche

1. Optisch tastender Sensor (110), umfassend:
eine Sendeeinheit (210) zum Emittieren eines optischen Sendesignals (212) in einen vorbestimmten Abtastbereich (130) des Sensors (110),
eine Empfangseinheit (220), die ausgebildet ist, einen reflektierten oder remittierten Teil (222) des Sendesignals (212) zu erfassen und ein entsprechendes Empfangssignal (224) auszugeben,
eine Auswertungseinheit (230), die ausgebildet ist, zumindest ein Objekt (215) in dem Abtastbereich (130) des Sensors (110) anhand des Empfangssignals zu detektieren,
wobei der Abtastbereich (130) einen Teilbereich (150) umfasst, der sich durch mindestens eine Charakteristik bezüglich des Sendesignals (212), des Empfangssignals (224) und/oder der Auswertung des Empfangssignals (224) von dem restlichen Abtastbereich (130) unterscheidet, und
wobei die Auswertungseinheit (230) ausgebildet ist, die Detektion des Objekts (215) behindernde Störeinflüsse (140) anhand eines Anteils des Empfangssignals (224) nachzuweisen, der dem Teilbereich (150) zugeordnet ist, und
wobei das Sendesignal (212) den Abtastbereich (130) in aufeinanderfolgenden Scanlagen (120) überstreicht,
**dadurch gekennzeichnet, dass**
der Teilbereich (150) durch mindestens eine ausgewählte Scanlage gebildet ist.

2. Sensor (110) nach Anspruch 1,
**dadurch gekennzeichnet, dass**
das Sendesignal (212) zu aufeinanderfolgenden Zeitpunkten jeweils eine vorbestimmte geometrische Form innerhalb des Abtastbereichs (130) abdeckt und
die geometrische Form den Teilbereich (150) zum Nachweis der Störeinflüsse (140) zu mindestens einem vorbestimmten Zeitpunkt abdeckt.

3. Sensor (110) nach Anspruch 1 oder 2, **dadurch gekennzeichnet, dass**
der Sensor (110) an einer Sensorposition (170) an einer Vorrichtung (100) angebracht ist und
die mindestens eine ausgewählte Scanlage, die den Teilbereich (150) bildet, oberhalb einer horizontalen Ebene angeordnet ist, welche die Sensorposition (170) umfasst und parallel zu einer Bodenebene (160) verläuft, auf der die Vorrichtung (100) angeordnet ist.

4. Sensor (110) nach einem der vorstehenden Ansprüche,
**dadurch gekennzeichnet, dass**
dem Teilbereich (150) ein separates Sendeelement der Sendeeinheit (210) zugeordnet ist.

5. Sensor (110) nach einem der vorstehenden Ansprüche,
**dadurch gekennzeichnet, dass**
dem Teilbereich (150) ein separates Empfangselement der Empfangseinheit (220) zugeordnet ist.

6. Sensor (110) nach Anspruch 5,
**dadurch gekennzeichnet, dass**
das Empfangselement der Empfangseinheit (220), das dem Teilbereich (150) zugeordnet ist, eine größere Sensitivität aufweist als die weiteren Empfangselemente der Empfangseinheit (220).

7. Sensor (110) nach einem der vorstehenden Ansprüche,
**dadurch gekennzeichnet, dass**
die Auswertungseinheit (230) ausgebildet ist, das Empfangssignal (224), das dem Teilbereich (150) zugeordnet ist, mittels spezieller Auswertungsschritte zu verarbeiten, die von den Auswertungsschritten verschieden sind, mit denen die Auswertungseinheit (230) das Empfangssignal (224) verarbeitet, das den weiteren Bereichen des Abtastbereichs (130) außerhalb des Teilbereichs (150) zugeordnet ist, so dass dem Teilbereich (150) mittels der Auswertungseinheit (230) eine eigene Auswertung zugeordnet ist, die zum Nachweis der Störeinflüsse vorgesehen ist.

8. Sensor (110) nach einem der vorstehenden Ansprüche,
**dadurch gekennzeichnet, dass**
die Auswertungseinheit (230) ausgebildet ist, ein zusätzliches Kontrollsignal zu empfangen und den Nachweis der Störeinflüsse (140) anhand des Kontrollsignals zu überprüfen.

9. Sensor (110) nach einem der vorstehenden Ansprüche,
**dadurch gekennzeichnet, dass**
der Sensor (110) als Lidar-Sensor ausgebildet ist.

10. Sensor (110) nach einem der vorstehenden Ansprüche,
**dadurch gekennzeichnet, dass**
die Störeinflüsse (140) Nebel umfassen.

11. Verwendung eines Sensors (110) nach einem der vorstehenden Ansprüche zum Nachweis von Störeinflüssen, insbesondere von Nebel, in einem Abtastbereich (130) des Sensors (110).

## Claims

1. An optically scanning sensor (110), comprising:
a transmission unit (210) for emitting an optical transmission signal (212) into a predetermined scanning zone (130) of the sensor (110),
a reception unit (220) which is configured to capture a reflected or remitted portion (222) of the transmission signal (212) and to output a corresponding reception signal (224),
an evaluation unit (230) which is configured to detect at least one object (215) in the scanning zone (130) of the sensor (110) based on the reception signal,
wherein the scanning zone (130) comprises a partial zone (150) which differs from the remaining scanning zone (130) by at least one characteristic with respect to the transmission signal (212), the reception signal (224) and/or the evaluation of the reception signal (224), and
wherein the evaluation unit (230) is configured to identify interfering influences (140), which hinder the detection of the object (215), based on a portion of the reception signal (224) that is associated with the partial zone (150), and
wherein the transmission signal (212) sweeps over the scanning zone (130) in consecutive scanning layers (120),
**characterized in that**
the partial zone (150) is formed by at least one selected scanning layer.

2. A sensor (110) according to claim 1,
**characterized in that**
the transmission signal (212) covers a respective predetermined geometric shape within the scanning zone (130) at consecutive points in time and
the geometric shape covers the partial zone (150) for identifying the interfering influences (140) at at least one predetermined point in time.

3. A sensor (110) according to claim 1 or 2,
**characterized in that**
the sensor (110) is attached to an apparatus (100) at a sensor position (170) and
the at least one selected scanning layer, which forms the partial zone (150), is arranged above a horizontal plane which comprises the sensor position (170) and extends parallel to a ground plane (160) on which the apparatus (100) is arranged.

4. A sensor (110) according to any one of the preceding claims,
**characterized in that**
a separate transmission element of the transmission unit (210) is associated with the partial zone (150).

5. A sensor (110) according to any one of the preceding claims,
**characterized in that**
a separate reception element of the reception unit (220) is associated with the partial zone (150).

6. A sensor (110) according to claim 5,
**characterized in that**
the reception element of the reception unit (220) that is associated with the partial zone (150) has a greater sensitivity than the further reception elements of the reception unit (220).

7. A sensor (110) according to any one of the preceding claims,
**characterized in that**
the evaluation unit (230) is configured to process the reception signal (224) that is associated with the partial zone (150) by means of specific evaluation steps that are different from the evaluation steps with which the evaluation unit (230) processes the reception signal (224) which is associated with the further regions of the scanning zone (130) outside the partial zone (150) so that a separate evaluation, which is provided for identifying the interfering influences, is associated with the partial zone (150) by means of the evaluation unit (230).

8. A sensor (110) according to any one of the preceding claims,
**characterized in that**
the evaluation unit (230) is configured to receive an additional control signal and to check the identification of the interfering influences (140) based on the control signal.

9. A sensor (110) according to any one of the preceding claims,
**characterized in that**
the sensor (110) is configured as a lidar sensor.

10. A sensor (110) according to any one of the preceding claims,
**characterized in that**
the interfering influences (140) comprise fog.

11. Use of a sensor (110) according to any one of the preceding claims for identifying interfering influences, in particular fog, in a scanning zone (130) of the sensor (110).

## Revendications

1. Capteur à balayage optique (110) comprenant :
une unité d'émission (210) destinée à émettre un signal optique d'émission (212) dans une zone de balayage prédéterminée (130) du capteur (110),
une unité de réception (220) conçue pour capter une partie réfléchie ou réémise (222) du signal d'émission (212) et pour délivrer un signal de réception correspondant (224),
une unité d'évaluation (230) conçue pour détecter au moins un objet (215) dans la zone de balayage (130) du capteur (110) à l'aide du signal de réception,
la zone de balayage (130) comprenant une sous-zone (150) qui se distingue du reste de la zone de balayage (130) par au moins une caractéristique relative au signal d'émission (212), au signal de réception (224) et/ou à l'évaluation du signal de réception (224), et
l'unité d'évaluation (230) étant conçue pour identifier les perturbations (140) entravant la détection de l'objet (215) à partir d'une partie du signal de réception (224) associée à la sous-zone (150), et
le signal d'émission (212) balayant la zone de balayage (130) en couches de balayage successives (120),
**caractérisé en ce que**
la sous-zone (150) est formée par au moins une couche de balayage sélectionnée.

2. Capteur (110) selon la revendication 1,
**caractérisé en ce que**
le signal d'émission (212) couvre, à des instants successifs, une forme géométrique prédéterminée à l'intérieur de la zone de balayage (130) et
la forme géométrique couvre la sous-zone (150) destinée à identifier les perturbations (140) à au moins un instant prédéterminé.

3. Capteur (110) selon la revendication 1 ou 2,
**caractérisé en ce que**
le capteur (110) est monté à une position du capteur (170) sur un dispositif (100) et
l'au moins une couche de balayage sélectionnée formant la sous-zone (150) est disposée au-dessus d'un plan horizontal qui comprend la position du capteur (170) et s'étend parallèlement à un plan de sol (160) sur lequel est disposé le dispositif (100).

4. Capteur (110) selon l'une des revendications précédentes,
**caractérisé en ce que**
un élément d'émission séparé de l'unité d'émission (210) est associé à la sous-zone (150).

5. Capteur (110) selon l'une des revendications précédentes,
**caractérisé en ce que**
un élément de réception séparé de l'unité de réception (220) est associé à la sous-zone (150).

6. Capteur (110) selon la revendication 5,
**caractérisé en ce que**
l'élément de réception de l'unité de réception (220) associé à la sous-zone (150) présente une sensibilité supérieure à celle des autres éléments de réception de l'unité de réception (220).

7. Capteur (110) selon l'une des revendications précédentes, **caractérisé en ce que**
l'unité d'évaluation (230) est conçue pour traiter le signal de réception (224) associé à la sous-zone (150) au moyen d'étapes d'évaluation spécifiques, différentes des étapes d'évaluation avec lesquelles l'unité d'évaluation (230) traite le signal de réception (224) associé aux autres zones de la zone de balayage (130) situées en dehors de la sous-zone (150), de sorte qu'une évaluation propre, destinée à l'identification des perturbations, est associée à la sous-zone (150) au moyen de l'unité d'évaluation (230).

8. Capteur (110) selon l'une des revendications précédentes,
**caractérisé en ce que**
l'unité d'évaluation (230) est conçue pour recevoir un signal de contrôle supplémentaire et pour vérifier l'identification des perturbations (140) à l'aide dudit signal de contrôle.

9. Capteur (110) selon l'une des revendications précédentes,
**caractérisé en ce que**
le capteur (110) est conçu comme un capteur lidar.

10. Capteur (110) selon l'une des revendications précédentes,
**caractérisé en ce que**
les perturbations (140) comprennent du brouillard.

11. Utilisation d'un capteur (110) selon l'une des revendications précédentes pour identifier des perturbations, en particulier du brouillard, dans une zone de balayage (130) du capteur (110).
